Europäisches Patentamt

European Patent Office

Office européen des brevets

(11) Numéro de publication: **0 414 603 A1**

# DEMANDE DE BREVET EUROPEEN

(21) Numéro de dépôt: **90402321.5**

(22) Date de dépôt: **21.08.90**

(51) Int. Cl.5: **G05G 7/02, F16C 1/12, G05G 5/05**

(30) Priorité: **21.08.89 FR 8911075**

(43) Date de publication de la demande:
**27.02.91 Bulletin 91/09**

(84) Etats contractants désignés:
**BE DE ES FR GB IT NL SE**

(71) Demandeur: **CONSTRUCTIONS BREVETEES D'ALFORTVILLE**
**189/191 rue Paul Vaillant Couturier**
**F-94140 Alfortville(FR)**

(72) Inventeur: **Lejeune, Robert C.**
**12 Rue Rolant Oudot**
**F-94000 Creteil(FR)**

(74) Mandataire: **Hasenrader, Hubert et al**
**Cabinet BEAU DE LOMENIE 55, rue d'Amsterdam**
**F-75008 Paris(FR)**

(54) Dispositif de manoeuvre pour système de commande à câble sous gaine.

(57) L'invention concerne un dispositif (10) de manoeuvre pour système de commande à câble (56) sous gaine (58) comprenant un boîtier (12) auquel aboutit l'ensemble câble/gaine, un levier (16) monté pivotant sur le boîtier et actionnable manuellement par un opérateur, et une liaison mécanique entre le levier (16) et le câble (56) du système de commande, caractérisé en ce qu'il comporte une tige (30) de commande reliée au câble et guidée dans le boîtier en translation dans le prolongement du câble (56), une crémaillère (26) latérale solidaire de la tige (30), et un secteur denté (24) solidaire du levier (16) en engrènement avec ladite crémaillère.

FIG.1

EP 0 414 603 A1

## DISPOSITIF DE MANOEUVRE POUR SYSTÈME DE COMMANDE À CÂBLE SOUS GAINE.

La présente invention concerne un dispositif de manoeuvre pour système de commande à câble sous gaine.

De façon classique, un tel dispositif comprend un boîtier, fixé à portée d'un opérateur, auquel aboutit l'ensemble câble/gaine qui est relié par ailleurs à un organe à commander, par exemple un distributeur hydraulique, un levier monté pivotant sur le boîtier et actionnable à la main, et une liaison mécanique entre le levier et le câble du système de commande.

Les dispositifs connus présentent habituellement deux inconvénients :
- le raccordement de l'ensemble câble/gaine s'effectue par la partie inférieure du boîtier, obligeant ainsi à rallonger l'ensemble câble/gaine et à lui faire parcourir une boucle pour permettre un tel raccordement ;
- la liaison mécanique entre le levier et le câble consiste en une biellette attachée avec articulation d'une part à l'embout de câble et, d'autre part, à un bras latéral solidaire du levier. Il résulte du parcours circulaire du bras latéral du levier que les efforts transmis au câble ne sont pas purement longitudinaux et comportent des composantes transversales indésirables et génératrices d'usure. De plus, le rapport entre l'effort appliqué sur le levier et l'effort appliqué au câble varie de façon approximativement sinusoïdale.

Afin de pallier ces inconvénients, la présente invention propose un dispositif de manoeuvre du type spécifié ci-avant, caractérisé en ce qu'il comporte une tige de commande reliée au câble et guidée en translation en va-et-vient dans le prolongement du câble, une crémaillère latérale solidaire de ladite tige, et un secteur denté solidaire dudit levier, en engrènement avec ladite crémaillère.

Ainsi, grâce au fait que la liaison mécanique entre le levier et le câble est assurée par un système à secteur denté et crémaillère, les efforts transmis au câble sont purement longitu dinaux et le rapport entre l'effort appliqué sur le levier et l'effort appliqué au câble reste constant.

De plus, il est facile de prévoir que le raccordement de l'ensemble câble/gaine soit situé latéralement sur le boîtier, en disposant la tige horizontalement dans le boîtier.

En outre, on peut facilement et directement associer à la tige un dispositif à ressort de rappel en position neutre à double action, tandis que, dans les dispositifs antérieurs, il convient de prévoir une tige intermédiaire à cet effet.

Enfin, le dispositif selon l'invention peut être complété de façon simple par deux organes de butée réglables limitant le basculement du levier dans l'une ou l'autre direction. Avantageusement, ces organes de butées réglables consisteront en deux vis engagées dans le boîtier et coopérant avec le secteur denté solidaire du levier.

De préférence, le levier et le secteur denté sont venus d'une seule pièce. De même, la crémaillère pourra être formée directement sur la tige.

Selon les procédés de fabrication employés pour le boîtier, pour la pièce formant levier et secteur denté et pour la tige recevant la crémaillère et le dispositif à ressort de rappel, on pourra limiter les opérations d'usinage à un nombre réduit d'opérations simples, comme l'alésage d'un trou ou le dressage d'une face d'appui.

Les détails et avantages de l'invention apparaîtront clairement à la lecture de la description qui va suivre, en se référant aux figure annexées qui représentent :

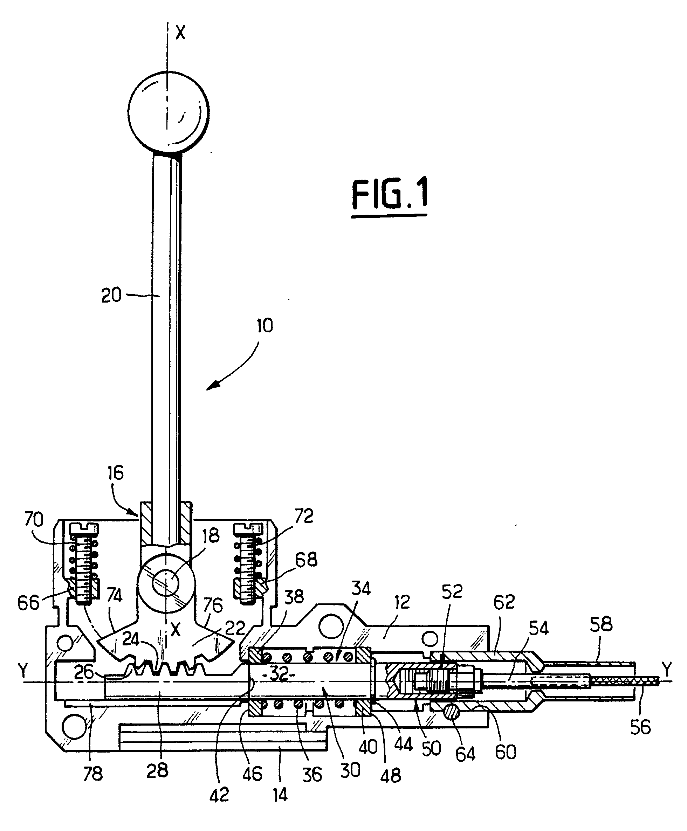

- la figure 1, une coupe longitudinale d'un dispositif conforme à l'invention, et
- la figure 2, une coupe analogue d'une variante.

Le dispositif 10 comprend un boîtier 12 constitué par exemple de deux moitiés symétriques par rapport au plan de la figure.

Pour permettre le montage du dispositif sur un support non représenté, par exemple un support d'un poste de conduite d'un engin de travaux publics, le boîtier comporte des formes de glissière 14 par lesquelles il peut être engagé sur une forme de rail complémentaire.

Un levier de manoeuvre manuelle 16 est monté pivotant dans le boîtier autour d'un axe 18 et comporte un bras 20 qui se projette sensiblement verticalement vers le haut hors du boîtier et à portée de main d'un opérateur lorsque le dispositif est monté sur son support.

A l'opposé du bras 20, donc vers le bas, le levier comporte un prolongement 22 muni à sa périphérie d'un secteur denté 24 d'une certaine étendue angulaire autour de l'axe 18 et de façon sensiblement symétrique par rapport à l'axe médian XX du bras 20 du levier.

Le secteur denté 24 engrène avec une crémaillère 26 ménagée latéralement sur la queue 28 d'une tige 30 qui s'étend sensiblement horizontalement dans le boîtier 12 et perpendiculairement au bras 20 du levier 16.

La tige 30 est guidée dans le boîtier 12 afin de ne pouvoir s'y déplacer en va-et-vient, c'est-à-dire vers la gauche ou la droite à la figure, que dans la direction de son axe longitudinal YY.

La partie centrale 32 de la tige reçoit un dispositif 34 à ressort de rappel en position centrée, à double action.

Ce dispositif comprend un ressort 36 entourant la tige et contenu entre deux rondelles 38, 40 en appui sur deux épaulements de la tige, un épaulement 42 ménagé sur la tige elle-même du côté de sa queue 28 et un épaulement 44 formé par un jonc entourant la tige.

Les deux rondelles sont également en appui contre deux épaulements opposés 46, 48 du boîtier.

Ce dispositif bien connu permet de ramener la tige vers une position centrale, comme illustré à la figure, dans laquelle le levier est ramené en orientation généralement verticale lorsque, après avoir basculé le levier dans un sens ou l'autre, on le relâche.

A son extrémité opposée 50, la tige comporte des moyens d'attache 52 destinés à recevoir un embout 54 fixé à l'extrémité d'un câble 56 mobile en va-et-vient dans une gaine 58.

Autour de l'extrémité 50 de la tige, le boîtier comporte un logement 60 destiné à recevoir un embout 62 fixé à l'extrémité de la gaine 58, le blocage de ce dernier étant assuré par tout moyen conventionnel, par exemple une goupille 64 transversale comme illustré.

De part et d'autre de l'axe 18 du levier 16 le boîtier comporte deux pattes 66, 68 sur lesquelles sont fixées des vis réglables de butée 70, 72 permettant de limiter le basculement du levier 16 dans un sens ou dans l'autre respectivement.

Le secteur denté 24 du prolongement inférieur 22 du levier comporte deux flancs 74, 76 destinés à venir en butée contre les vis 70, 72 selon le sens de basculement du levier.

Enfin, entre le côté de la queue 28 de la tige 30 opposé à la crémaillère 26 et le boîtier est interposée une plaque de glissement 78 réalisée dans un matériau approprié afin de réduire les frottements entre le boîtier et la tige lors des déplacements de celle-ci en va-et-vient et de constituer si nécessaire une pièce d'usure remplaçable.

Lorsque le bras 20 du levier est basculé vers la droite à la figure, le prolongement 22 et le secteur denté 24 tournent vers la gauche, ce qui entraîne la crémaillère 28 et la tige 30 vers la gauche, et déplace le câble 56 vers la gauche par rapport à sa gaine 58, étant fait observer que l'effort transmis par la tige au câble est purement longitudinal, donc exempt de composante transversale indésirable.

De plus, le rapport entre l'effort appliqué au bras 20 du levier et l'effort transmis au câble 58 reste constant au cours du basculement du levier.

Du fait du déplacement de la tige, la rondelle 40 comprime le ressort de rappel 36 contre l'épaulement 46 du boîtier, de sorte que le ressort ramène la tige dans la position centrée de la figure et le bras de levier en orientation verticale lorsqu'on relâche ce dernier.

Lorsque le levier est basculé vers la gauche, le fonctionnement est symétrique, la tige 30 se déplaçant vers la droite en poussant le câble 56 vers la droite par rapport à sa gaine 58.

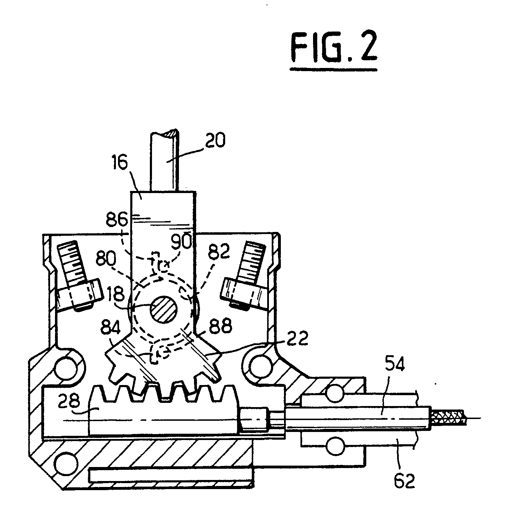

Dans la variante illustrée à la figure 2, le dispositif de ressort de rappel en position centrée est composé de deux ressorts spiralés qui coopèrent avec le levier 16 comme il va être décrit ci-après.

Sur la figure, seul l'un des ressorts 80 est représenté en traits pointillés, l'autre étant en avant du plan de coupe de la figure.

Le ressort 80 est enroulé autour d'un bossage 82 prévu latéralement sur le levier autour de l'axe 18 et comporte deux pattes 84, 86, à ses deux extrémités, l'une des pattes 84 prenant appui contre un téton 88 du boîtier 12 et l'autre 86 contre un téton 90 du levier.

L'autre ressort est disposé symétriquement, ses pattes prenant appui sur des tétons correspondants du boîtier et du levier, mais en direction opposée.

Ainsi, pour chaque sens de basculement du levier, l'un des ressorts sera déformé par le levier et exercera un couple de rappel correspondant sur le levier, les deux ressorts rappelant ensemble le levier en position centrée.

Cette variante permettra de réduire la longueur du corps.

Le raccordement du câble et de la gaine s'effectuant latéralement sur le corps, on pourra ainsi prévoir un trajet nettement plus direct pour l'ensemble câble/gaine vers un organe non représenté commandé à l'autre extrémité de l'ensemble câble/gaine.

On pourra utiliser des techniques de fabrication relativement simples pour la réalisation des diverses pièces du dispositif.

Avantageusement les techniques de moulage, éventuellement sous pression, permettent d'obtenir des pièces pratiquement finies et de limiter les opérations d'usinage ultérieures.

## Revendications

1. Dispositif (10) de manoeuvre pour système de commande à câble (56) sous gaine (58) comprenant un boîtier (12) auquel aboutit l'ensemble câble/gaine, un levier (16) monté pivotant sur le boîtier et actionnable manuellement par un opérateur, et une liaison mécanique entre le levier (16) et le câble (56) du système de commande, caractérisé en ce qu'il comporte une tige (30) de commande reliée au câble et guidée dans le boîtier en translation dans le prolongement du câble (56), une crémaillère (26) latérale solidaire de la tige (30), et un secteur denté (24) solidaire du levier (16) en engrènement avec ladite crémaillère.

2. Dispositif selon la revendication 1, caractérisé en ce que le levier (16) comprend, de part et d'autre d'un axe de pivotement (18), un bras de manoeuvre (20) et un prolongement (22) sur lequel est ménagé ledit secteur denté (24).

3. Dispositif selon la revendication 2, caractérisé en ce que le boîtier (12) comporte deux organes réglables de butée (70, 72) coopérant avec des flancs (74, 76) du prolongement (22) afin de limiter le basculement du levier (16) autour de son axe (18).

4. Dispositif selon l'une quelconque des revendications 1 à 3, caractérisé en ce que le levier (16) et la tige (30) s'étendent sensiblement perpendiculairement l'un par rapport à l'autre.

5. Dispositif selon l'une quelconque des revendications 1 à 4, caractérisé en ce qu'il comporte un dispositif à ressort de rappel (36) à double action associé à ladite tige (30).

6. Dispositif selon l'une quelconque des revendications 1 à 4, caractérisé en ce qu'il comporte un dispositif à ressort de rappel (80) à double action associé audit levier (16).

7. Dispositif selon l'une quelconque des revendications 1 à 6, caractérisé en ce que le levier (16) et le secteur denté (24) sont venus d'une seule pièce.

8. Dispositif selon l'une quelconque des revendications 1 à 7, caractérisé en ce que la crémaillère (26) est formée directement sur la tige (30).

FIG.1

EP 0 414 603 A1

# FIG. 2

# RAPPORT DE RECHERCHE EUROPEENNE

Numéro de la demande

**EP 90 40 2321**

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| X,Y | DE-A-3 431 433 (GESELLSSCHAFT FÜR STEUERUNGS-TECHNIK MBH)<br>* page 10, lignes 1 - 14; figure 3 *<br>– – – | 1,2,4,8,3, 6 | G 05 G 7/02<br>F 16 C 1/12<br>G 05 G 5/05 |
| X | EP-A-0 053 215 (LOSENHAUSEN)<br>* page 7, lignes 1 - 23 * * page 10, lignes 17 - 24; figures 1-2 *<br>– – – | 1-2,5,8 | |
| X,A | US-A-4 236 421 (BABA)<br>* colonne 3, lignes 21 - 47 * * colonne 4, lignes 54 - 58; figure 7 *<br>– – – | 1,8,2,3 | |
| Y | GB-A-4 646 86 (TAMPIER)<br>* page 3, lignes 56 - 65; figure 1 *<br>– – – | 3 | |
| Y | US-A-3 543 602 (RIEDLE)<br>* colonne 1, lignes 28 - 62; figures 1, 2 *<br>– – – | 6 | |
| A | EP-A-0 079 089 (SKF NOVA)<br>* page 1, alinéa 7 - page 2, alinéa 1; figure 1 *<br>– – – – – | 3 | |

DOMAINES TECHNIQUES RECHERCHES (Int. Cl.5)

G 05 G
F 16 C
F 16 H

Le présent rapport de recherche a été établi pour toutes les revendications

| Lieu de la recherche | Date d'achèvement de la recherche | Examinateur |
|---|---|---|
| La Haye | 16 novembre 90 | FLODSTROEM J.B. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire
T : théorie ou principe à la base de l'invention

E : document de brevet antérieur, mais publié à la date de dépôt ou après cette date
D : cité dans la demande
L : cité pour d'autres raisons

& : membre de la même famille, document correspondant